Europäisches Patentamt

European Patent Office

Office européen des brevets

(19)

(11) EP 1 361 342 A1

(12) EUROPEAN PATENT APPLICATION
published in accordance with Art. 158(3) EPC

(43) Date of publication:
12.11.2003 Bulletin 2003/46

(51) Int Cl.⁷: F01K 23/10, F01K 23/06,
F02G 5/04, F01N 5/02

(21) Application number: 02715848.4

(22) Date of filing: 21.01.2002

(86) International application number:
PCT/JP02/00384

(87) International publication number:
WO 02/059465 (01.08.2002 Gazette 2002/31)

(84) Designated Contracting States:
AT BE CH CY DE DK ES FI FR GB GR IE IT LI LU
MC NL PT SE TR

(30) Priority: 26.01.2001 JP 2001000191

(71) Applicant: Honda Giken Kogyo Kabushiki Kaisha
Minato-ku, Tokyo 107-8556 (JP)

(72) Inventors:
• BABA, Tsuyoshi
K. K. Honda Gijutsu kenkenkyusho
Wako-shi, Saitama 351-0193 (JP)

• SHINOHARA, Masashi
K. K. Honda Gijutsu Kenkyusho
Wako-shi, Saitama 351-0193 (JP)
• ENDOH, Tsuneo K. K. enkda Gijutsu Kenkyusho
Wako-shi, Saitama 351-0193 (JP)

(74) Representative: Herzog, Markus, Dipl.-Phys. Dr.
Weickmann & Weickmann
Patentanwälte
Postfach 86 08 20
81635 München (DE)

(54) WORKING MEDIUM FEED AND CONTROL DEVICE FOR HEAT EXCHANGER

(57) A working medium supply control system in a heat exchanger is provided. The heat exchanger (14) carries out heat exchange between an exhaust gas flowing through an exhaust passage of an internal combustion engine (11) and water flowing through a heat transfer tube (13), and the exhaust gas thereby heats the water to generate steam at a target temperature. The system is provided with a plurality of flow control valves (17a to 17j) that can individually regulate the amount of water supplied to a plurality of headers provided in the heat transfer tube (13), and control means (21) individually controls the amounts of water supplied via the respective flow control valves (17a to 17j) based on the rotational speed and the load of the internal combustion engine (11). This makes the temperature distribution of the heat transfer tube (13) coincide with a preset temperature distribution even when the operational state of the internal combustion engine (11) changes and the temperature and the flow rate of the exhaust gas change, thus converting input energy of the exhaust gas into output energy of the steam without consuming it in changing the temperature of the heat transfer tube (13), and thereby improving the transient responsiveness of the steam temperature. The temperature of the steam generated by the heat exchanger can therefore be controlled at a target temperature with good responsiveness even when the operational state of the internal combustion engine changes.

FIG.2

**Description**

FIELD OF THE INVENTION

The present invention relates to a heat exchanger for carrying out heat exchange between an exhaust gas flowing through an exhaust passage of an internal combustion engine and a working medium flowing through a heat transfer tube, the exhaust gas thereby heating the working medium to generate steam at a target temperature and, in particular, to a system for controlling supply of the working medium.

BACKGROUND ART

With regard to a Rankine cycle system in which a liquid phase working medium is heated in an evaporator to which the exhaust gas of an internal combustion engine is supplied, thereby generating high temperature, high pressure steam, this steam is supplied to an expander, the thermal energy and the pressure energy of the steam are converted into mechanical energy, and the low temperature, low pressure steam that has completed work is turned back into the liquid phase working medium in a condenser and resupplied to the evaporator, Japanese Patent Application Laid-open No. 6-88523 discloses an arrangement in which the waste heat recovery efficiency is improved and the occurrence of knocking is suppressed by cooling the vicinity of an intake port of the internal combustion engine by the low temperature working medium.

Furthermore, Japanese Utility Model Registration Publication No. 2-38162 discloses an arrangement in which steam is generated by heating water by means of a waste heat once-through boiler to which the exhaust gas of an internal combustion engine is supplied wherein, when carrying out feedback control so as to make the actual steam temperature coincide with a target steam temperature by changing the amount of water supplied, a feedforward signal obtained according to the degree of throttle opening of the internal combustion engine is added to a feedback signal, thus improving the precision of the control.

Moreover, Japanese Utility Model Registration Publication No. 1-33768 discloses an internal combustion engine Rankine cycle system in which a heat storage layer made of an alkaline earth metal oxide is formed on the outer periphery of an evaporator, and a material that can undergo an exothermic reaction is supplied to the heat storage layer when cold-starting the internal combustion engine to compensate for the lack of thermal energy of the exhaust gas, thus accelerating the warm-up of the evaporator.

The arrangement disclosed in Japanese Patent Application Laid-open No. 6-88523 is for improving the heat exchange efficiency during steady operation of the internal combustion engine, and makes no mention of the responsiveness of the steam temperature when the operational state of the internal combustion engine changes. In the arrangement disclosed in Japanese Utility Model Registration Publication No. 2-38162, the amount of water supplied is changed according to the degree of throttle opening of the internal combustion engine, but since the water is supplied to the waste heat once-through boiler from a single location, it is difficult to control the steam temperature with good responsiveness. The arrangement disclosed in Japanese Utility Model Registration Publication No. 1-33768 is for improving the responsiveness of the steam temperature, but since its use is limited to accelerating the warm-up of the internal combustion engine during a cold start, there is the problem that it lacks multi-purpose features.

DISCLOSURE OF THE INVENTION

The present invention has been accomplished in view of the above-mentioned circumstances, and it is an object of the present invention to control the temperature of steam generated in a heat exchanger at a target temperature with good responsiveness even when the operational state of the internal combustion engine changes.

In order to accomplish this object, in accordance with a first aspect of the present invention, there is proposed a working medium supply control system in a heat exchanger for carrying out heat exchange between an exhaust gas flowing through an exhaust passage of an internal combustion engine and a working medium flowing through a heat transfer tube, the exhaust gas thereby heating the working medium to generate steam at a target temperature, characterized by: a plurality of working medium distribution means that can individually regulate the amount of working medium supplied to a plurality of working medium inlets provided in the heat transfer tube and spaced in the longitudinal direction thereof, and control means for controlling the amounts of working medium distributed by the plurality of working medium distribution means based on a parameter that represents the operational state of the internal combustion engine.

In accordance with this arrangement, since the plurality of working medium distribution means for individually supplying the working medium to the plurality of working medium inlets provided in the heat transfer tube and spaced in the longitudinal direction thereof are controlled by the control means based on the parameter that represents the operational state of the internal combustion engine, even when the operational state of the internal combustion engine changes and the temperature and the flow rate of the exhaust gas change, it is possible to supply an appropriate amount of the working medium to each working medium inlet of the heat transfer tube so as to prevent the temperature distribution of the heat transfer tube from deviating from a preset temperature distribution, and convert input energy of the exhaust gas into output energy of the steam without consuming it in changing the temperature of the heat transfer tube, thus improving the transient responsiveness of the steam temperature.

Furthermore, in accordance with a second aspect of the present invention, in addition to the first aspect, there is proposed a working medium supply control system in a heat exchanger wherein the parameter is the amount of intake air taken in by the internal combustion engine.

In accordance with this arrangement, since the amounts of working medium supplied to the plurality of working medium inlets are controlled according to the amount of intake air taken in by the internal combustion engine, the temperature distribution of the heat transfer tube can be made to coincide accurately with a preset temperature distribution.

Moreover, in accordance with a third aspect of the present invention, in addition to the first aspect, there is proposed a working medium supply control system in a heat exchanger wherein the parameter is at least one of the rotational speed of the internal combustion engine and the load of the internal combustion engine.

In accordance with this arrangement, since the amounts of working medium supplied to the plurality of working medium inlets are controlled according to at least one of the rotational speed of the internal combustion engine and the load of the internal combustion engine, the temperature distribution of the heat transfer tube can be made to coincide accurately with the preset temperature distribution.

Headers 15a to 15j of embodiments correspond to the working medium inlets of the present invention, flow control valves 17a to 17j of the embodiment correspond to the working medium distribution means of the present invention, and a GA method calculation computer 21 of the embodiment corresponds to the control means of the present invention.

BRIEF DESCRIPTION OF THE DRAWINGS

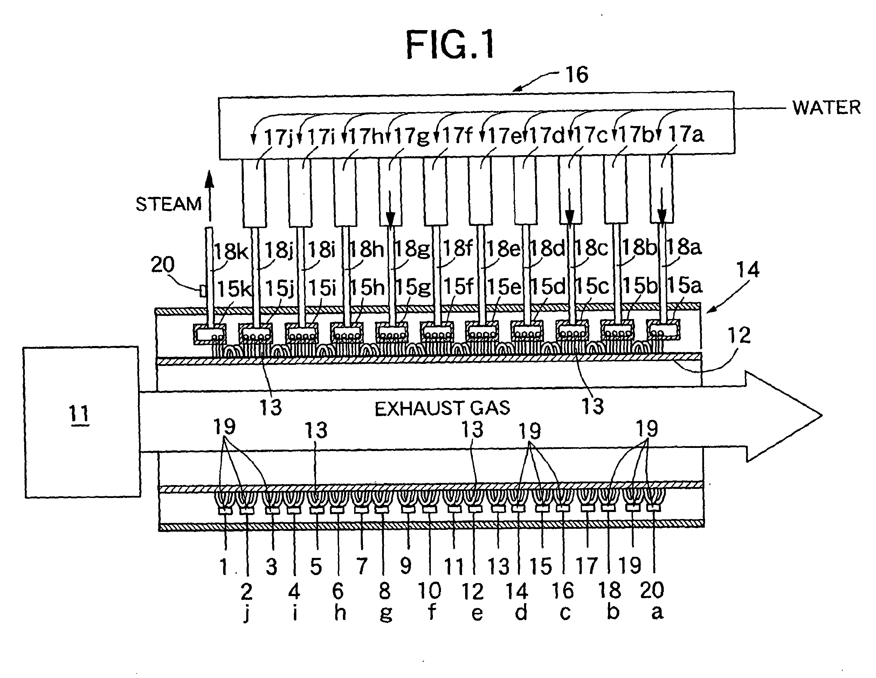

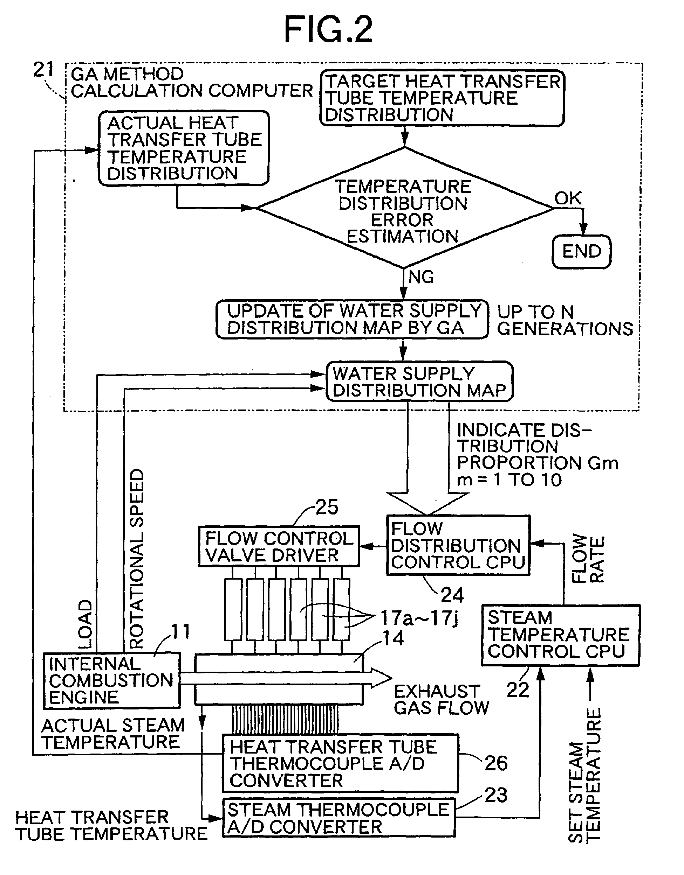

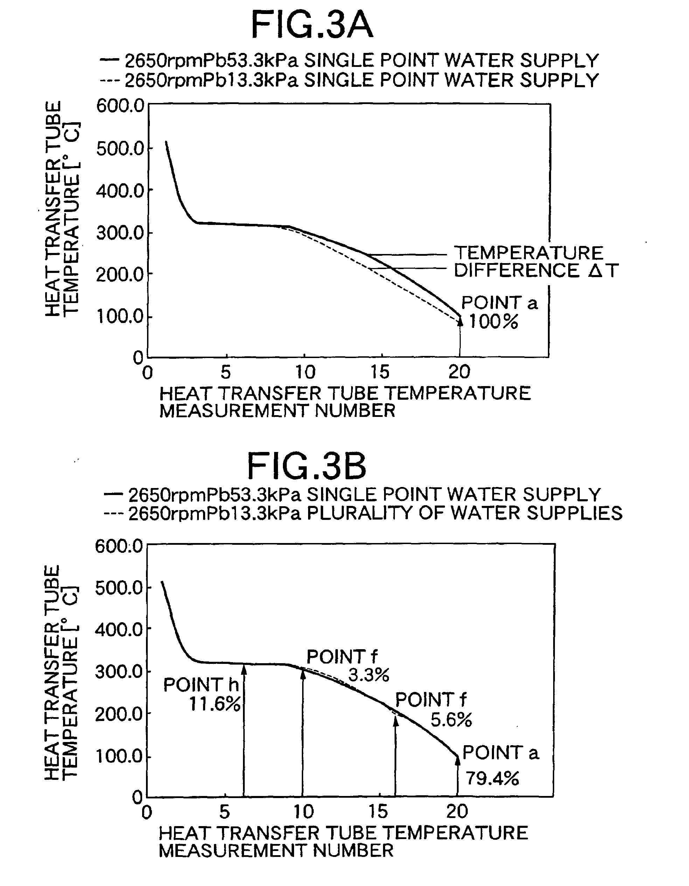

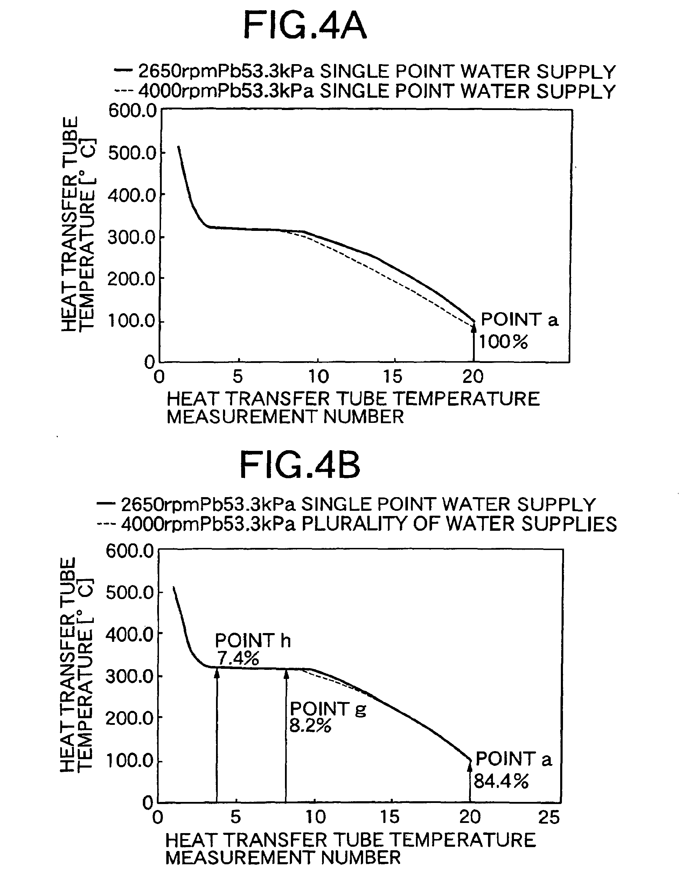

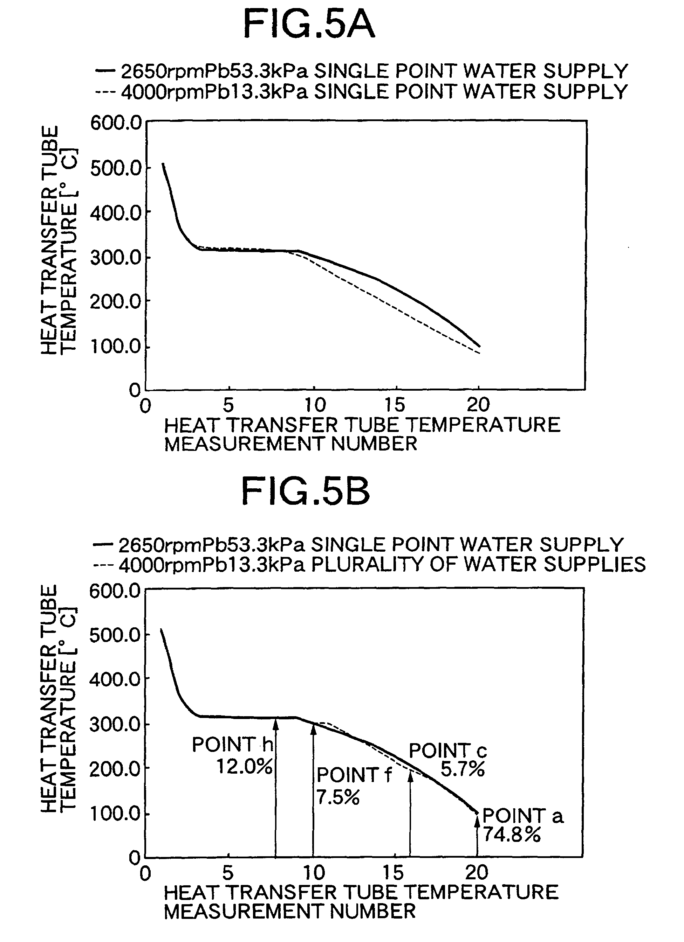

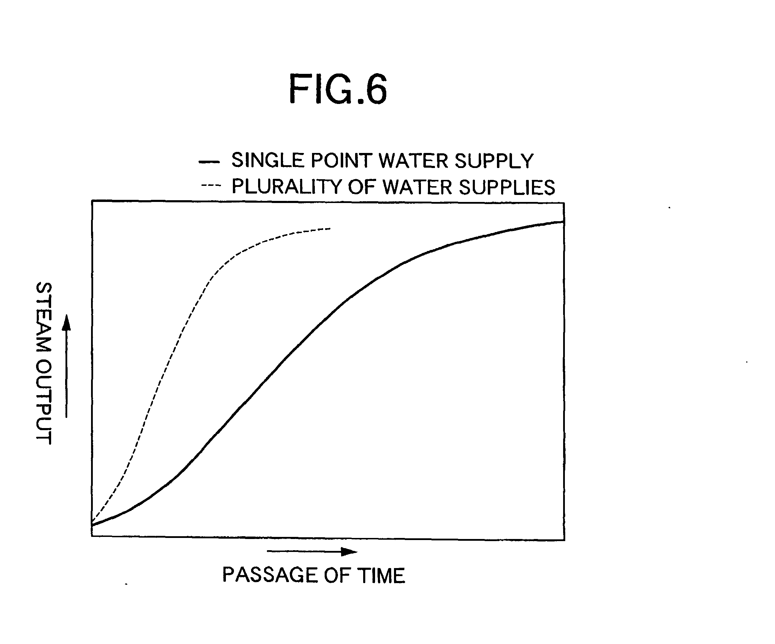

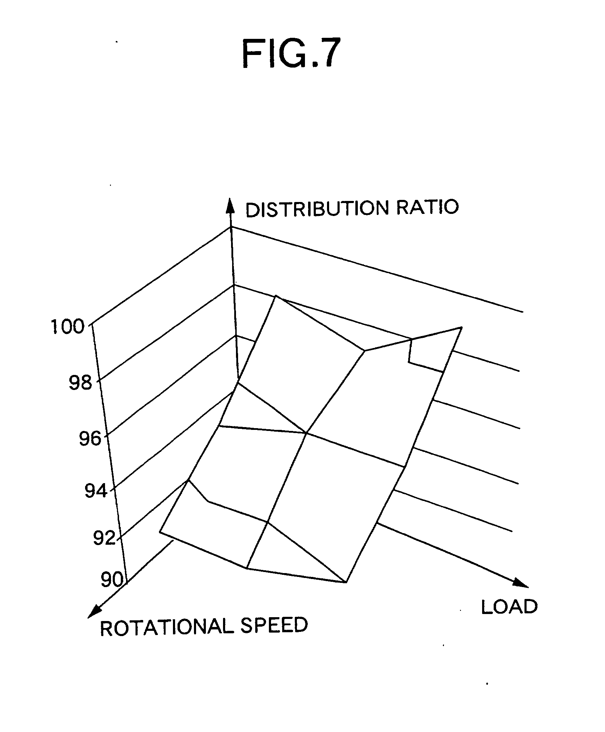

FIG. 1 to FIG. 7 illustrate embodiments of the present invention; FIG. 1 is a longitudinal cross section of a heat exchanger; FIG. 2 is a diagram showing the arrangement of a control system; FIG. 3A and FIG. 3B are graphs for explaining the operation of a first embodiment; FIG. 4A and FIG. 4B are graphs for explaining the operation of a second embodiment; FIG. 5A and FIG. 5B are graphs for explaining the operation of a third embodiment; FIG. 6 is a graph for explaining the effect of a plurality of water supplies relative to a single water supply; and FIG. 7 is a map for looking up the distribution ratio of the amounts of water supplied from the rotational speed and the load of an internal combustion engine.

BEST MODE FOR CARRYING OUT THE INVENTION

Modes for carrying out the present invention are explained below by reference to embodiments of the present invention illustrated in the attached drawings.

FIG. 1 to FIG. 7 show embodiments of the present invention.

As shown in FIG. 1, a heat exchanger 14 is disposed so as to cover the outer periphery of an exhaust passage 12 extending from an internal combustion engine 11, the heat exchanger 14 being formed from a heat transfer tube 13 through which water flows as a working medium. The heat transfer tube 13 extends from the downstream side to the upstream side in the direction of exhaust gas flow, that is, the exhaust gas and the water flow in opposite directions to each other. Eleven headers 15a to 15k are provided in the heat. transfer tube 13 from the upstream side to the downstream side at predetermined intervals. The ten headers 15a to 15j on the upstream side are connected to a water supply pipe 16, which is disposed along the heat exchanger 14, via corresponding flow control valves 17a to 17j and water supply passages 18a to 18j. The header 15k on the most downstream side is connected to a steam discharge passage 18k through which high temperature, high pressure steam is discharged.

Twenty thermocouples 19 are provided on the heat transfer tube 13 at predetermined intervals so that the temperature of the heat transfer tube 13 (that is, the temperature of water or steam flowing therethrough) can be measured. The positions of the twenty thermocouples 19 are designated by the numerals '1', '2', '3', '4' ··· '18', '19', '20' in going from the upstream side to the downstream side, and the positions of the ten headers 15a to 15j for supplying water can be represented by these numerals. Specifically, the position of the header 15a on the most upstream side corresponds to the number '20', and the header 15k on the most downstream side corresponds to the number '2'. Furthermore, provided in the steam discharge passage 18k is a thermocouple 20 for detecting the temperature of the high temperature, high pressure steam flowing therethrough.

FIG. 2 shows a method for controlling the degrees of opening of the flow control valves 17a to 17j by a GA method calculation computer 21.

Input into a steam temperature control CPU 22 are a set steam temperature for the steam to be discharged from the steam discharge passage 18k and an actual steam temperature of the steam detected by the thermocouple 20 (see FIG. 1) via a steam thermocouple A/D converter 23. The steam temperature control CPU 22 calculates the amount of water to be supplied to the water supply pipe 16 (see FIG. 1), based on the deviation of the actual steam temperature from the set steam temperature, so as to make the actual steam temperature converge with the set steam temperature, and outputs the amount of water thus calculated to a flow distribution control CPU 24. The flow distribution control CPU 24 calculates, based on a command from the GA method calculation computer 21, the ratio of the amounts of water distributed to the headers 15a to 15j of the heat exchanger 14 from the ten flow control valves 17a to 17j, and controls the degrees of opening of the flow control valves 17a to 17j via a flow control valve driver 25.

The GA method calculation computer 21 calculates the actual heat transfer tube temperature distribution from data obtained by A/D converting the temperature of each part of the heat transfer tube 13 detected by the twenty thermocouples 19 (see FIG. 1) by means of a heat transfer tube thermocouple A/D converter 26, and compares this temperature distribution with a preset target heat transfer tube temperature distribution. From the result of the comparison, if the estimated error for the temperature distribution is within a set range, then the control is ended, and if the estimated error of the temperature distribution is outside the set range, then the water supply distribution map is updated by the genetic algorithm method (GA method).

As shown as one example in FIG. 7, a water supply distribution map is set for each of the flow control valves 17a to 17j, and the distribution ratio is looked up therein using the rotational speed and the load (the degree of throttle opening and the intake negative pressure) of the internal combustion engine 11 as parameters. The distribution ratio referred to here means the proportion of the entire amount of water supplied to the heat exchanger 14 that is to be supplied to the particular one of the flow control valves 17a to 17j. Calculation by the GA method includes determining 100 types of distribution conditions for the water supply by generating random numbers and incorporating these distribution conditions into heat transfer calculations for the heat exchanger 14 so as to leave an optimum value. Subsequently, the above distribution conditions are crossed over to leave an optimum value in a second generation, this procedure is repeated up to 100 generations to update the value, and an optimal water supply distribution map is determined. When the water supply distribution map is determined in this way, the flow distribution control CPU 24 applies the rotational speed and the load of the internal combustion engine 11 to the water supply distribution map to look up flow distribution ratios for the flow control valves 17a to 17j, and outputs a command to the flow control valve driver 25.

FIG. 3A to FIG. 5B show the first to third embodiments of the present invention respectively, the numerals 1 to 20 on the abscissa of each graph correspond to the numerals 1 to 20 denoting the positions on the heat transfer tube 13 in FIG. 1, and the ordinate corresponds to the temperature of the heat transfer tube 13.

The solid line in FIG. 3A, which corresponds to the first embodiment, shows a temperature distribution of each part of the heat transfer tube 13 in an operational state in which the rotational speed of the internal combustion engine 11 is 2650 rpm and the load (intake negative pressure) is 53.2 kPa when water at 60°C is all supplied from a point a of the heat transfer tube 13 (the position corresponding to the flow control valve 17a on the most upstream side), that is, 100% of the amount of water calculated by the steam temperature control CPU 22 is supplied from the point a. In this process, the amount of water is set so that the steam temperature at the outlet of the heat transfer tube 13, that is, in the steam discharge passage 18k, is 500°C, which is the set steam temperature, and the steam pressure is 10 MPa.

As is clear from this figure, the water supplied from the point a (position '20') carries out heat exchange with the exhaust gas while flowing through the interior of the heat transfer tube 13 in a direction opposite to the direction of flow of the exhaust gas, the temperature of the water gradually increases in a liquid phase region where only water is present, the temperature is held constant in a two-phase region where both water and steam are present and the dryness gradually increases, the temperature gradually increases in a gas phase region where only steam is present, and the temperature finally becomes 500°C and the pressure becomes 10 MPa in the steam discharge passage 18k. This temperature distribution, which is shown by the solid line in FIG. 3A, is a reference temperature distribution.

On the other hand, the broken line in FIG. 3A shows a temperature distribution in a state in which the intake negative pressure of the internal combustion engine 11 is reduced from 53.2 kPa to 13.3 kPa and the load is increased. Since the temperature of the exhaust gas increases due to the increase in the load of the internal combustion engine 11, in order to maintain a temperature of 500°C and a pressure of 10 MPa in the steam discharge passage 18k it is necessary to increase the amount of water supplied at the point a, and as a result the temperature distribution in a portion on the upstream side of the heat transfer tube 13 (see the broken line) becomes lower than the temperature distribution when there is a low load (see the solid line), thus causing a temperature difference ΔT.

In order to generate steam at a constant temperature and a constant pressure it is necessary to change the amount of water supplied in response to the thermal energy (the temperature and the flow rate) of the exhaust gas. However, in a transition period in which the thermal energy of the exhaust gas and the amount of water supplied change, the entire thermal energy of the exhaust gas is not used for generating steam, and part of the thermal energy of the exhaust gas is consumed in changing the temperature of the heat transfer tube 13 until the temperature of the heat transfer tube 13 reaches a steady state, and is not converted into the thermal energy and the pressure energy of the steam.

That is, when the temperature of the heat transfer tube 13 increases by dT during an infinitesimal time interval $d\tau$, then

$$C \cdot dT = Q\_gas \cdot d\tau - Q\_steam \cdot d\tau$$

holds, where C is the thermal capacity of the heat transfer tube 13, Q_gas is the input energy of the exhaust gas, and Q_steam is the output energy of the steam, and when this equation is rearranged for Q_steam, then

$$Q\_steam = Q\_gas - C \cdot (dT/d\tau)$$

is obtained.

As is clear from this equation, since $dT/d\tau = 0$ in the steady state, Q_steam = Q_gas, and the entire input energy Q_gas of the exhaust gas is converted into the output energy Q_steam of the steam. However, while the temperature T of the heat transfer tube 13 is changing, an energy corresponding to $C \cdot (dT/d\tau)$ is consumed in changing the temperature of the heat transfer tube 13, and the responsiveness of the steam temperature is degraded by only this portion. Therefore, even when the operational state of the internal combustion engine 11 changes, if the temperature distribution of the heat transfer tube 13 is controlled so as not to deviate from the reference temperature distribution (the temperature distribution shown by the solid line in FIG. 3A), the input energy Q_gas of the exhaust gas can efficiently be converted into the output energy Q_steam of the steam, thus improving the responsiveness in the transition period.

Because of this, in the present embodiment, the ten flow control valves 17a to 17j are individually controlled according to changes in the operational state of the internal combustion engine 11, and predetermined amounts of water are supplied to a plurality of positions of the heat transfer tube 13, thus controlling the temperature distribution of the heat transfer tube 13 so that it does not deviate from the reference temperature distribution.

TABLE 1

| Water supply point | Flow rate [kg/s] | Proportion [%] |
| --- | --- | --- |
| a | 0.00235 | 79.4 |
| b | 0 | 0 |
| c | 0.00017 | 5.6 |
| d | 0 | 0 |
| e | 0 | 0 |
| f | 0.00010 | 3.3 |
| g | 0 | 0 |
| h | 0.00034 | 11.6 |
| i | 0 | 0 |
| j | 0 | 0 |
| k | 0 | 0 |

That is, when the intake negative pressure of the internal combustion engine 11 is decreased from 53.2 kPa to 13.3 kPa while maintaining the rotational speed thereof at 2650 rpm, as shown in Table 1, 79.4% of the total amount of water supplied is supplied to the point a (position '20'), 5.6% of the total amount of water supplied is supplied to the point c (position '16'), 3.3% of the total amount of water supplied is supplied to the point f (position '10'), and 11.4% of the total amount of water supplied is supplied to the point h (position '6'), thereby, as shown by the solid line in FIG. 3B, making the temperature distribution of the heat transfer tube 13 substantially coincide with the case where the intake negative pressure is 53.2 kPa (see the broken line).

This is because, by decreasing the amount of water supplied at the point a from 100% to 79.4%, if the amount of heat exchanged with the exhaust gas is unchanged, the slope of the increase in temperature of the heat transfer tube 13 in the liquid phase region in the vicinity of the point a increases, thus approaching the characteristics shown by the solid line. However, since if the slope of the increase in temperature in the liquid phase region is too steep the temperature increases beyond the characteristics shown by the solid line, by supplying 5.6% of the water at an appropriate point on the high temperate side of the point a, for example at the point c, the slope of the increase in temperature is made to coincide with the characteristics shown by the solid line. However, since the sum total of the amounts of water supplied at the point a and the point c in the liquid phase region is 85%, which is smaller than the 100% water supply at the point a, the two-phase region becomes shorter, and there is a possibility that the slope of the increase in temperature from the second half of the two-phase region to the gas phase region might be too steep. However, by supplying 3.3% and 11.6% of the water at the point f and the point h respectively, the slope of the increase in temperature from the second half of the two-phase region to the gas phase region can be made to approach the characteristics shown by the solid line.

Therefore, , the temperature and the pressure of the steam discharged from the steam discharge passage 18k can be controlled with good responsiveness so as not to deviate from 500°C and 10 MPa by efficiently converting the input energy Q_steam of the exhaust gas into the output energy Q_steam of the steam without consuming it in heating the heat transfer tube 13.

The second embodiment of the present invention is now explained by reference to FIG. 4A, FIG. 4B, and Table 2.

The solid lines in FIG. 4A and FIG. 4B denote the above-mentioned reference temperature distribution of the heat transfer tube 13 (the temperature distribution when the rotational speed is 2650 rpm, the intake negative pressure is 53.2 kPa, and all the water is supplied from the point a), whereas the broken line in FIG. 4A denotes a temperature distribution when all the water is supplied from the point a in a state in which the rotational speed of the internal combustion engine 11 is increased from 2650 rpm to 4000 rpm while maintaining the negative intake pressure thereof at 53.2 kPa. In this case, since the flow rate of the exhaust gas increases due to the increase in rotational speed of the internal combustion engine 11, a temperature difference is generated between the temperature distribution shown by the solid line and the temperature distribution shown by the broken line.

TABLE 2

| Water supply point | Flow rate [kg/s] | Proportion [%] |
|---|---|---|
| a | 0.00182 | 84.4 |
| b | 0 | 0 |
| c | 0 | 0 |
| d | 0 | 0 |
| e | 0 | 0 |
| f | 0 | 0 |
| g | 0.00018 | 8.2 |
| h | 0 | 0 |
| i | 0.00016 | 7.4 |
| j | 0 | 0 |
| k | 0 | 0 |

As shown in Table 2, 84.4% of the total amount of water supplied is supplied to the point a (position '20'), 8.2% of the total amount of water supplied is supplied to the point g (position '8'), and 7.4% of the total amount of water supplied is supplied to the point i (position '4'), thereby, as shown by the solid line in FIG. 4B, making the temperature distribution of the heat transfer tube 13 substantially coincide with the case in which the rotational speed is 2650 rpm (see the broken line). As a result, the input energy Q_steam of the exhaust gas can be efficiently converted into the output energy Q_steam of the steam without consuming it in heating the heat transfer tube 13, and the temperature and the pressure of the steam discharged from the steam discharge passage 18k can be controlled with good responsiveness so as not to deviate from 500°C and 10 MPa.

The third embodiment of the present invention is now explained by reference to FIG. 5A, FIG. 5B, and Table 3.

The solid lines in FIG. 5A and FIG. 5B denote the above-mentioned reference temperature distribution of the heat transfer tube 13 (the temperature distribution when the rotational speed is 2650 rpm, the intake negative pressure is 53.2 kPa, and all the water is supplied from the point a), whereas the broken line in FIG. 5A denotes the temperature distribution when all the water is supplied from the point a in a state in which the rotational speed of the internal combustion engine 11 is increased from 2650 rpm to 4000 rpm and the negative intake pressure thereof is decreased from 53.2 kPa to 13.3 kPa. In this case, since the flow rate of the exhaust gas increases due to the increase in rotational speed of the internal combustion engine 11, and the temperature of the exhaust gas increases due to the decrease in intake negative pressure, a temperature difference is generated between the temperature distribution shown by the solid line and the temperature distribution shown by the broken line.

TABLE 3

| Water supply point | Flow rate [kg/s] | Proportion [%] |
|---|---|---|
| a | 0.00374 | 74.8 |
| b | 0 | 0 |
| c | 0.00028 | 5.7 |
| d | 0 | 0 |
| e | 0 | 0 |
| f | 0.00038 | 7.5 |
| g | 0.00060 | 12.0 |
| h | 0 | 0 |
| i | 0 | 0 |
| j | 0 | 0 |
| k | 0 | 0 |

As shown in Table 3, 74.8% of the total amount of water supplied is supplied to the point a (position '20'), 5.7% of the total amount of water supplied is supplied to the point c (position '16'), 7.5% of the total amount of water supplied is supplied to the point f (position '10'), and 12.0% of the total amount of water supplied is supplied to the point g (position '8'), thereby, as shown by the solid line in FIG. 5B, making the temperature distribution of the heat transfer tube 13 substantially coincide with the case in which the rotational speed is 2650 rpm and the intake negative pressure is 53.2 kPa (see the broken line). As a result, the input energy Q_steam of the exhaust gas can be efficiently converted into the output energy Q_steam of the steam without consuming it in heating the heat transfer tube 13, and the temperature and the pressure of the steam discharged from the steam discharge passage 18k can be controlled with good responsiveness so as not to deviate from 500°C and 10 MPa.

FIG. 6 is a graph showing the responsiveness of the steam output with the passage of time when the operational state of the internal combustion engine 11 is rapidly changed from a state in which the rotational speed is 2650 rpm and the intake negative pressure is 53.2 kPa to a state in which the rotational speed is 4000 rpm and the intake negative pressure is 53.2 kPa. It can be found from this figure that the responsiveness is outstandingly improved in a case where there a plurality of water supplies (see the broken line in FIG. 5B) compared with a case where there is a single point water supply (see the broken line in FIG. 5A).

Although embodiments of the present invention are explained in detail above, the present invention can be modified in a variety of ways without departing from the spirit and scope thereof.

For example, in the embodiments both the rotational speed and the intake negative pressure of the internal combustion engine 11 are used as parameters representing the operational state of the internal combustion engine 11, but it is also possible to use either one thereof on its own, or the amount of intake air of the internal combustion engine 11.

Furthermore, instead of distributing the water to each of the headers 15a to 15k by means of the flow control valves 17a to 17j, the water can be distributed by an injector.

**Claims**

1.    A working medium supply control system in a heat exchanger for carrying out heat exchange between an exhaust gas flowing through an exhaust passage (12) of an internal combustion engine (11) and a working medium flowing through a heat transfer tube (13), the exhaust gas thereby heating the working medium to generate steam at a target temperature,

    **characterized by**:

    a plurality of working medium distribution means (17a to 17j) that can individually regulate the amount of working medium supplied to a plurality of working medium inlets (15a to 15j) provided in the heat transfer tube (13) and spaced in the longitudinal direction thereof; and
control means (21) for controlling the amounts of working medium distributed by the plurality of working medium distribution means (17a to 17j) based on a parameter that represents the operational state of the internal combustion engine (11).

2. The working medium supply control system in a heat exchanger according to Claim 1 wherein the parameter is the amount of intake air taken in by the internal combustion engine (11).

3. The working medium supply control system in a heat exchanger according to Claim 1 wherein the parameter is at least one of the rotational speed of the internal combustion engine (11) and the load of the internal combustion engine (11).

# FIG.1

STEAM

WATER

EXHAUST GAS

11

16
17j 17i 17h 17g 17f 17e 17d 17c 17b 17a
18k 18j 18i 18h 18g 18f 18e 18d 18c 18b 18a
20
15k 15j 15i 15h 15g 15f 15e 15d 15c 15b 15a
14
12
13    13    13
19    13    13    19    19

1   3   5   7   9   11   13   15   17   19
 2   4   6   8   10  12   14   16   18   20
 j   i   h   g   f   e    d    c    b    a

EP 1 361 342 A1

# FIG.2

21 GA METHOD CALCULATION COMPUTER

TARGET HEAT TRANSFER TUBE TEMPERATURE DISTRIBUTION

ACTUAL HEAT TRANSFER TUBE TEMPERATURE DISTRIBUTION

TEMPERATURE DISTRIBUTION ERROR ESTIMATION → OK → END

NG

UPDATE OF WATER SUPPLY DISTRIBUTION MAP BY GA — UP TO N GENERATIONS

WATER SUPPLY DISTRIBUTION MAP

INDICATE DISTRIBUTION PROPORTION Gm m = 1 TO 10

25 FLOW CONTROL VALVE DRIVER

FLOW DISTRIBUTION CONTROL CPU

FLOW RATE

24

17a~17j

14

11 INTERNAL COMBUSTION ENGINE

LOAD

ROTATIONAL SPEED

EXHAUST GAS FLOW

STEAM TEMPERATURE CONTROL CPU

22

ACTUAL STEAM TEMPERATURE

HEAT TRANSFER TUBE THERMOCOUPLE A/D CONVERTER — 26

STEAM THERMOCOUPLE A/D CONVERTER — 23

HEAT TRANSFER TUBE TEMPERATURE

SET STEAM TEMPERATURE

# FIG.3A

— 2650rpmPb53.3kPa SINGLE POINT WATER SUPPLY
--- 2650rpmPb13.3kPa SINGLE POINT WATER SUPPLY

TEMPERATURE
DIFFERENCE ΔT

POINT a
100%

HEAT TRANSFER TUBE TEMPERATURE [° C]

HEAT TRANSFER TUBE TEMPERATURE
MEASUREMENT NUMBER

# FIG.3B

— 2650rpmPb53.3kPa SINGLE POINT WATER SUPPLY
--- 2650rpmPb13.3kPa PLURALITY OF WATER SUPPLIES

POINT f
3.3%

POINT h
11.6%

POINT f
5.6%

POINT a
79.4%

HEAT TRANSFER TUBE TEMPERATURE [° C]

HEAT TRANSFER TUBE TEMPERATURE
MEASUREMENT NUMBER

11

EP 1 361 342 A1

# FIG.4A

— 2650rpmPb53.3kPa SINGLE POINT WATER SUPPLY
--- 4000rpmPb53.3kPa SINGLE POINT WATER SUPPLY

# FIG.4B

— 2650rpmPb53.3kPa SINGLE POINT WATER SUPPLY
--- 4000rpmPb53.3kPa PLURALITY OF WATER SUPPLIES

# FIG.5A

— 2650rpmPb53.3kPa SINGLE POINT WATER SUPPLY
--- 4000rpmPb13.3kPa SINGLE POINT WATER SUPPLY

HEAT TRANSFER TUBE TEMPERATURE [° C]

HEAT TRANSFER TUBE TEMPERATURE MEASUREMENT NUMBER

# FIG.5B

— 2650rpmPb53.3kPa SINGLE POINT WATER SUPPLY
--- 4000rpmPb13.3kPa PLURALITY OF WATER SUPPLIES

HEAT TRANSFER TUBE TEMPERATURE [° C]

POINT h
12.0%

POINT f
7.5%

POINT c
5.7%

POINT a
74.8%

HEAT TRANSFER TUBE TEMPERATURE MEASUREMENT NUMBER

FIG.6

— SINGLE POINT WATER SUPPLY
--- PLURALITY OF WATER SUPPLIES

STEAM OUTPUT

PASSAGE OF TIME

# FIG.7

**EP 1 361 342 A1**

## INTERNATIONAL SEARCH REPORT

| International application No. |
|---|
| PCT/JP02/00384 |

**A. CLASSIFICATION OF SUBJECT MATTER**
Int.Cl$^7$ F01K23/10, F01K23/06, F02G5/04, F01N5/02

According to International Patent Classification (IPC) or to both national classification and IPC

**B. FIELDS SEARCHED**

Minimum documentation searched (classification system followed by classification symbols)
Int.Cl$^7$ F01K23/10, F01K23/06, F02G5/04, F01N5/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | CD-ROM of the specification and drawings annexed to the request of Japanese Utility Model Application No. 93645/1991(Laid-open No. 4826/1995) (Samson Co., Ltd.), 24 January, 1995 (24.01.95), Full text (Family: none) | 1-3 |
| Y | JP 60-108507 A (Hitachi Zosen Corp.), 14 June, 1985 (14.06.85), Fig. 2; page 2, lower right column, lines 17 to 19 (Family: none) | 1-3 |
| Y | JP 63-289203 A (Mazda Motor Corp.), 25 November, 1988 (25.11.88), Fig. 5; page 6, upper right column, lines 10 to 11 (Family: none) | 1-3 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 April, 2002 (30.04.02) | 21 May, 2002 (21.05.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

16

**EP 1 361 342 A1**

## INTERNATIONAL SEARCH REPORT

| | International application No. |
|---|---|
| | PCT/JP02/00384 |

C (Continuation). DOCUMENTS CONSIDERED TO BE RELEVANT

| Category* | Citation of document, with indication, where appropriate, of the relevant passages | Relevant to claim No. |
|---|---|---|
| Y | US 6119457 A1 (Hideo KAWAMURA), 10 November, 1998 (10.11.98), Fig. 1 & EP 874143 A            & JP 10-299574 A & JP 10-299472 A | 1-3 |
| Y | US 4684321 A1 (Caterpillar Inc.), 04 August, 1987 (04.08.87), Fig. 1 & EP 202234 A           & JP 6-26400 A | 1-3 |

Form PCT/ISA/210 (continuation of second sheet) (July 1998)

17